# EUROPEAN PATENT APPLICATION

(11) **EP 4 826 536 A1**
(43) Date of publication of application: **21.10.2026**
(21) Application number: 25208960.2
(22) Date of filing: 15.10.2025
(51) Int. Cl.: G06F 9/50, G06F 11/34

(54) **RESOURCE RESCHEDULING METHOD, ELECTRONIC DEVICE, AND STORAGE MEDIUM**

(30) Priority: 14.04.2025 CN 202510465270
(71) Applicant: Beijing Zitiao Network Technology Co., Ltd., Beijing 100190 (CN); Bytedance Technology Ltd., KY1 - 1205 Grand Cayman Cayman Islands (KY)
(72) Inventor: SONG, Xinyi, Beijing, 100028 (CN); LI, Bing, Beijing, 100028 (CN); REN, Yuquan, Beijing, 100028 (CN); LIN, Caixue, Los Angeles, 90066 (US); XIANG, Wu, Beijing, 100028 (CN)
(74) Representative: Isarpatent

(57) **Abstract**

Embodiments of the present disclosure provide a resource rescheduling method, an electronic device, and a storage medium. The method includes: configuring at least two rescheduling policies according to user configuration information, wherein each rescheduling policie is used to generate an instance rescheduling task for achieving a different rescheduling target; generating a target instance rescheduling task based on a target rescheduling policy and running data of a resource cluster in response to an independent trigger condition corresponding to the target rescheduling policy being satisfied, wherein the running data is used to represent a real-time running state of resource nodes in the resource cluster, and the target instance rescheduling task is to indicate a group of a source resource node and a corresponding destination resource node; and executing the target instance rescheduling task to reschedule a target instance running in the source resource node to the destination resource node.

## Description

### CROSS-REFERENCE TO RELATED APPLICATION

This application claims priority to Chinese Patent Application No. 202510465270.8, filed on April 14, 2025, the entire disclosure of which is incorporated herein by reference as part of the present disclosure.

### TECHNICAL FIELD

Embodiments of the present disclosure relate to the field of cloud computing technologies and, in particular, to a resource rescheduling method and apparatus, an electronic device, and a storage medium.

### BACKGROUND

In an application scenario of cloud services and cloud computing, a large-scale resource cluster refers to a distributed resource set composed of a large number of resource nodes (also referred to as computing nodes, such as servers). These resource nodes are interconnected through a high-speed network and work together to provide elastic computing, storage, and network services.

At present, with the continuous expansion of the scale of a resource cluster and the increasing richness of resource types, the difficulty and requirements for resource scheduling are getting higher and higher. In the prior art, a resource rescheduler deployed in a resource cluster may usually implement only a single and simple rescheduling policy, which leads to a problem of poor effect of resource rescheduling of the resource cluster, thereby affecting the overall quality of the resource cluster.

### SUMMARY

On the first aspect, embodiments of the present disclosure provide a resource rescheduling method, comprising: configuring at least two rescheduling policies according to user configuration information, wherein each of the at least two rescheduling policies is used to generate an instance rescheduling task for achieving a different rescheduling target; generating a target instance rescheduling task based on a target rescheduling policy and running data of a resource cluster in response to an independent trigger condition corresponding to the target rescheduling policy being satisfied, wherein the running data is used to represent a real-time running state of resource nodes in the resource cluster, and the target instance rescheduling task is at least used to indicate a group of a source resource node and a destination resource node corresponding to the source resource node in the resource cluster; and executing the target instance rescheduling task to reschedule a target instance running in the source resource node to the destination resource node.

In at least an embodiment, each of the at least two rescheduling policies corresponds to at least one independent trigger condition; and/or the independent trigger condition is a combined trigger condition that requires at least two sub-trigger conditions to be satisfied simultaneously; and the method further comprises:
configuring the independent trigger condition corresponding to each of the at least two rescheduling policies according to the user configuration information.

In at least an embodiment, the generating the target instance rescheduling task based on the target rescheduling policy and the running data of the resource cluster comprises: calling a detector interface corresponding to the target rescheduling policy, detecting the running data of the resource cluster by a detector corresponding to the target rescheduling policy, determining a rescheduling type corresponding to the target rescheduling policy, and obtaining a target instance and a source resource node where the target instance is located according to the rescheduling type, wherein the detector is used to determine the source resource node that matches a rescheduling target corresponding to the target rescheduling policy; obtaining the destination resource node according to the target instance and the source resource node; and generating the target instance rescheduling task based on the target instance, the source resource node, and the destination resource node.

In at least an embodiment, the obtaining the destination resource node according to the target instance and the source resource node comprises: calling a target rescheduling algorithm service corresponding to the target rescheduling policy, and processing the running data, the target instance, and the source resource node by the target rescheduling algorithm service to obtain the destination resource node, wherein different rescheduling policies are configured with different rescheduling algorithm services for determining the destination resource node that matches the rescheduling target.

In at least an embodiment, the rescheduling target comprises one of follows: load balancing, network bandwidth balancing, and defragmentation; when the rescheduling target is load balancing or network bandwidth balancing, the target rescheduling algorithm service is used to select, as the destination resource node, a resource node whose load in the resource cluster is less than or equal to a first threshold; and when the rescheduling target is defragmentation, the target rescheduling algorithm service is used to select, as the destination resource node, a resource node whose deployment efficiency for the target instance in the resource cluster is greater than or equal to a second threshold.

In at least an embodiment, the target instance rescheduling task is used to indicate the target instance, the source resource node wherein the target instance is located, and the destination resource node, and before the executing the target instance rescheduling task, the method further comprises: performing conflict verification on the target instance, the source resource node, and the destination resource node that correspond to the target instance rescheduling task to obtain a verification result, wherein the verification result is used to indicate whether the target instance rescheduling task conflicts with an instance rescheduling task corresponding to a non-target rescheduling policy; and the executing the target instance rescheduling task comprises: executing the target instance rescheduling task if the verification result represents that there is no conflict, wherein the verification result comprises at least a first verification result representing that there is a conflict, and the first verification result comprises at least one of follows: a source resource node conflict, a destination resource node conflict, and a target instance conflict.

In at least an embodiment, the performing conflict verification on the target instance, the source resource node, and the destination resource node that correspond to the target instance rescheduling task to obtain a verification result comprises: calling a verifier corresponding to the target rescheduling policy, wherein the verifier is used to detect whether the target instance rescheduling task corresponding to the target rescheduling policy has a negative impact on the rescheduling target corresponding to the non-target rescheduling policy; and processing the target instance rescheduling task based on the verifier to obtain the verification result.

In at least an embodiment, the processing the target instance rescheduling task based on the verifier to obtain the verification result comprises: acquiring, based on the verifier, a verification interface corresponding to each non-target rescheduling policy, wherein the verification interface is used to detect whether the instance rescheduling task has a negative impact on a rescheduling target corresponding to the each non-target rescheduling policy; processing the target instance rescheduling task by the verification interface corresponding to the each non-target rescheduling policy, respectively, to obtain a detection result corresponding to the each non-target rescheduling policy, respectively; and obtaining the verification result according to the detection result corresponding to the each non-target rescheduling policy.

In at least an embodiment, there are at least two target instance rescheduling tasks, and the executing the target instance rescheduling task to reschedule a target instance running in the source resource node to the destination resource node comprises: grouping the at least two target instance rescheduling tasks to generate at least one task execution batch, wherein each of the at least one task execution batch is used to execute at least two of the at least two target instance rescheduling tasks, and target instances scheduled by target instance rescheduling tasks in one task execution batch are used to support at least one target business service; and performing queuing processing on the at least one task execution batch so that the target instance corresponding to each of the at least two target instance rescheduling tasks is rescheduled to the corresponding destination resource node.

In at least an embodiment, the grouping the at least two target instance rescheduling tasks to generate at least one task execution batch comprises: obtaining a transfer state and a dependency relationship of a target instance corresponding to each of the at least two target instance rescheduling tasks between the resource nodes according to the running data of the resource cluster and the each target instance rescheduling task; and generating the at least one task execution batch according to the transfer state and the dependency relationship of the target instance corresponding to the each target instance rescheduling tasks between the resource nodes and an instance disruption budget of the resource cluster, wherein the instance disruption budget is used to represent a maximum number or a maximum proportion of unavailable instances in a target group in the resource cluster, and the target group is a set of instances that support the target business service.

In at least an embodiment, the method further comprises: detecting an expired instance rescheduling task from an unprocessed task execution batch, wherein the expired instance rescheduling task is a non-latest generated instance rescheduling task in at least two homogeneous instance rescheduling tasks, and the at least two homogeneous instance rescheduling tasks are target instance rescheduling tasks generated by a same rescheduling policy; and deleting a task execution batch corresponding to the expired instance rescheduling task.

On the second aspect, embodiments of the present disclosure provide a resource rescheduling apparatus, comprising: a configuration module, configured to configure at least two rescheduling policies according to user configuration information, wherein each of the rescheduling policies is used to generate an instance rescheduling task for achieving a different rescheduling target; a rescheduling module, configured to generate a target instance rescheduling task based on a target rescheduling policy and running data of a resource cluster in response to an independent trigger condition corresponding to the target rescheduling policy being satisfied, wherein the running data is used to represent a real-time running state of resource nodes in the resource cluster, and the target instance rescheduling task is at least used to indicate a group of a corresponding source resource node and a corresponding destination resource node in the resource cluster; and an execution module, configured to execute the target instance rescheduling task to reschedule a target instance running in the source resource node to the destination resource node.

On the third aspect, embodiments of the present disclosure provide an electronic device, comprising: a processor and a memory; wherein the memory stores a computer-executable instruction; and the processor executes the computer-executable instruction stored in the memory to cause the resource rescheduling method of any one of the above embodiments to be implemented.

On the fourth aspect, embodiments of the present disclosure provide a non-transitory computer-readable storage medium, wherein a computer-executable instruction is stored in the computer-readable storage medium, and when the computer-executable instruction is executed by a processor, the resource rescheduling method of any one of the above embodiments is implemented.

On the fourth aspect, embodiments of the present disclosure provide a computer program product, comprising a computer program, wherein when the computer program is executed by a processor, the resource rescheduling method of any one of the above embodiments is implemented.

### BRIEF DESCRIPTION OF DRAWINGS

In order to more clearly illustrate the technical solutions in the embodiments of the present disclosure or in the prior art, the drawings required in describing the embodiments or the prior art will be briefly introduced below. Obviously, the drawings in the following description are some embodiments of the present disclosure, and for those of ordinary skill in the art, other drawings may also be obtained from these drawings without any inventive work.
Fig. 1 is a diagram of an application scenario of a resource rescheduling method provided by an embodiment of the present disclosure;
Fig. 2 is a first schematic flowchart of a resource rescheduling method provided by an embodiment of the present disclosure;
Fig. 3 is a flowchart of a specific implementation of step S 102 in the embodiment shown in Fig. 2;
Fig. 4 is a flowchart of another specific implementation of step S102 in the embodiment shown in Fig. 2;
Fig. 5 is a second schematic flowchart of a resource rescheduling method provided by an embodiment of the present disclosure;
Fig. 6 is a flowchart of a specific implementation of step S203 in the embodiment shown in Fig. 5;
Fig. 7 is a flowchart of a specific implementation of step S2032 in the embodiment shown in Fig. 6;
Fig. 8 is a flowchart of a specific implementation of step S204 in the embodiment shown in Fig. 5;
Fig. 9 is a flowchart of a specific implementation of step S2041 in the embodiment shown in Fig. 8;
Fig. 10 is a schematic architectural diagram of a rescheduling solution provided by an embodiment of the present disclosure;
Fig. 11 is a structural block diagram of a resource rescheduling apparatus provided by an embodiment of the present disclosure;
Fig. 12 is a schematic structural diagram of an electronic device provided by an embodiment of the present disclosure; and
Fig. 13 is a schematic hardware structural diagram of an electronic device provided by an embodiment of the present disclosure.

### DETAILED DESCRIPTION

In order to make the purposes, technical solutions, and advantages of embodiments of the present disclosure clearer, the technical solutions in the embodiments of the present disclosure will be described clearly and comprehensively with reference to the drawings in the embodiments of the present disclosure. Obviously, the described embodiments are part of the embodiments of the present disclosure, but not all of the embodiments. All other embodiments obtained by those of ordinary skill in the art based on the embodiments of the present disclosure without any inventive work belong to the scope of protection of the present disclosure.

It should be noted that the user information (including but not limited to user device information, user personal information, etc.) and data (including but not limited to data for analysis, stored data, displayed data, etc.) involved in the present disclosure are information and data authorized by the user or fully authorized by all parties, and the collection, use, and processing of the relevant data need to comply with the relevant laws, regulations, and standards of the relevant countries and regions, and a corresponding operation entry is provided for the user to choose to authorize or reject.

The following explains the application scenarios of the embodiments of the present disclosure:
The resource rescheduling method provided by the embodiments of the present disclosure may be applied to a process of rescheduling resources in a resource cluster in a scenario of cloud services and cloud computing. The execution body of this embodiment may be an electronic device with a computing capability, such as a scheduling node deployed in the resource cluster or other electronic devices that perform similar functions. The scheduling node may execute the method provided in this embodiment by running a service or an application for managing the resource cluster. The service or the application for managing the resource cluster may run partially or entirely on the management device so that the purpose of rescheduling the resources in the cluster may be achieved.

In some embodiments, the execution body of this embodiment may execute the resource rescheduling method provided by the embodiments of the present disclosure by running various computer-executable instructions or computer programs. For example, the computer-executable instructions may be program-level commands, machine instructions, or software instructions. The computer program may be a native program or a software module in an operating system; may be a local application, that is, a program that needs to be installed in the operating system to run, or may be a program that runs based on a browser environment. In summary, the above computer-executable instructions may be any form of instructions, and the above computer program may be any form of application, module, or plugin, and the specific implementation may be configured as needed. Further, in the process of implementing the resource rescheduling method provided by the embodiments of the present disclosure, the electronic device as the execution body may execute the method by running the computer-executable instructions or the computer program provided locally, or may execute the method by calling the computer-executable instructions or the computer program provided in an external server. In some embodiments, the server may be an independent physical server, a server cluster or a distributed system composed of a plurality of physical servers, or a cloud server that provides basic cloud computing services such as cloud services, cloud storage, cloud communication, cloud database, cloud computing, cloud functions, network services, middleware services, domain name services, security services, content delivery networks (Content Delivery Network, CDN), and big data and artificial intelligence platforms. The cloud services may be interactive processing services for the terminal device to call.

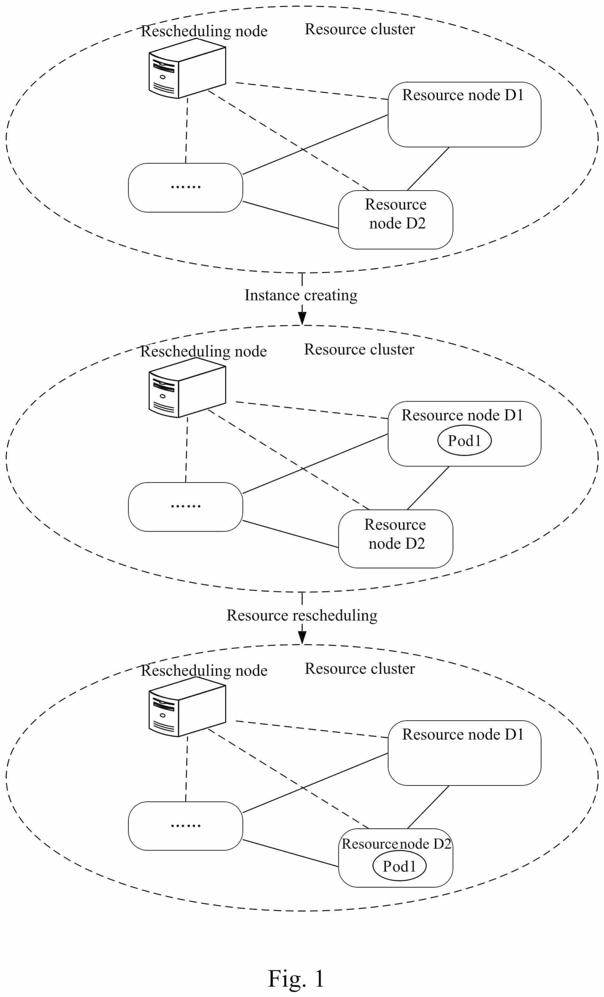

Fig. 1 is a diagram of an application scenario of a resource rescheduling method provided by an embodiment of the present disclosure. As shown in Fig. 1, a large number of resource nodes are included in a resource cluster, where the resource cluster is also referred to as a device cluster, that is, a cluster composed of a large number of physical or virtual devices with computing power and resources, and the resource nodes in the resource cluster are devices that provide computing resources. A rescheduling node is also deployed in the resource cluster. The rescheduling node may also be referred to as a rescheduler. The rescheduler needs to find a suitable node for an instance on the premise of ensuring throughput. For example, as shown in the figure, an instance Pod1 is created in a resource node D1, and the computing resources of the resource node D1 are used to run the instance Pod1. After that, with the changes in the running states of the resource cluster and the instances, the previous resource allocation scheme in the resource cluster may no longer meet the expectations, resulting in phenomena such as load imbalance and resource fragmentation. In this situation, the rescheduling node is required to reschedule the resources in the cluster (that is, resource rescheduling) according to the overall running state of the resource cluster. For example, the instance Pod1 running in the resource node D1 is rescheduled to a resource node D2 to run so that the loads of the resource node D1 and the resource node D2 are rebalanced, thereby realizing the dynamic load adjustment of the resource cluster and improving the comprehensive quality of the resource cluster.

In the prior art, the above resource rescheduling process is usually based on a single policy, for example, simple load balancing is performed according to the load of each resource node. With the continuous expansion of the scale of the resource cluster and the increasing complexity of the carried service content, the resource rescheduling scheme in the prior art is difficult to meet the rescheduling requirements of the huge resource cluster, resulting in the problems of poor effect and low efficiency of resource rescheduling of the resource cluster, which in turn affects the overall quality of the resource cluster.

An embodiment of the present disclosure provides a resource rescheduling method to solve the above problems.

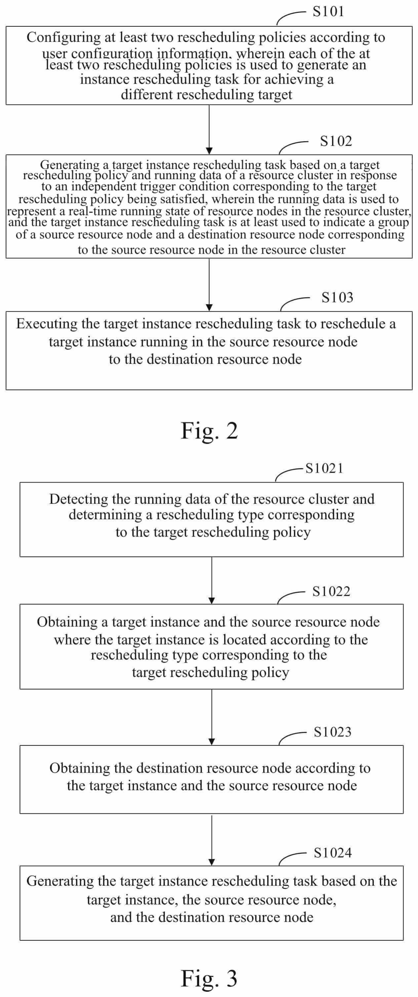

Fig. 2 is a first schematic flowchart of a resource rescheduling method provided by an embodiment of the present disclosure. The method of this embodiment may be applied to a scheduling node or a rescheduler in a resource cluster. Taking the rescheduler as an example, the rescheduler may execute program codes deployed locally to implement the resource rescheduling method provided in this embodiment. In another possible implementation, an external server may be configured to deploy a functional service implemented based on the resource rescheduling method provided in this embodiment, and the rescheduler may access the above server and call the corresponding functional service to implement the resource rescheduling method provided in this embodiment. Exemplarily, the resource rescheduling method provided in this embodiment includes the following steps.

Step S101: configuring at least two rescheduling policies according to user configuration information, wherein each of the at least two rescheduling policies is used to generate an instance rescheduling task for achieving a different rescheduling target.

Step S102: generating a target instance rescheduling task based on a target rescheduling policy and running data of a resource cluster in response to an independent trigger condition corresponding to the target rescheduling policy being satisfied, wherein the running data is used to represent a real-time running state of resource nodes in the resource cluster, and the target instance rescheduling task is at least used to indicate a group of a source resource node and a destination resource node corresponding to the source resource node in the resource cluster.

Step S103: executing the target instance rescheduling task to reschedule a target instance running in the source resource node to the destination resource node.

With reference to the schematic diagram of the application scenario shown in Fig. **1****,** in this embodiment, a rescheduler is used as an execution body to introduce the provided resource rescheduling method. Exemplarily, the rescheduler is configured with an access entry, and a user may access the access entry through an operating terminal to communicate with the rescheduler. After that, the terminal device sends user configuration information to the rescheduler to configure rules for resource rescheduling in the resource cluster. Specifically, for example, two rescheduling policies for the resource cluster are configured through the user configuration information, where each rescheduling policy is used to generate a different instance rescheduling task, and different rescheduling targets are achieved after the instance rescheduling task is executed. For example, the two rescheduling policies are configured through the user configuration information, which are a rescheduling policy D1 and a rescheduling policy D2, respectively. The instance rescheduling task generated by the rescheduling policy D1 is used to achieve the rescheduling target of load balancing after being executed, while the instance rescheduling task generated by the rescheduling policy D2 is used to achieve the rescheduling target of resource defragmentation after being executed.

Further, in a possible implementation, the above user configuration information records specific implementations corresponding to each of the at least two rescheduling policies, such as program codes of execution logic corresponding to the rescheduling policies. The rescheduler directly calls the above program codes to implement the configuration of the corresponding rescheduling policies. In another possible implementation, the above user configuration information records policy identifications (policy names) and reference information corresponding to the at least two rescheduling policies, where the reference information includes, for example, scheduling execution parameters, independent trigger conditions, data scope of action, and the like. The scheduling execution parameters are preconfigured and used to generate the instance rescheduling task, which will not be repeated. The independent trigger conditions are conditions for triggering the corresponding rescheduling policies, such as periodic triggering, signal triggering, request triggering, and the like. The data scope of action is the resource nodes or instances involved in the instance rescheduling task, which may be determined based on the cloud service mapped by the user identification (tenant name). After that, the rescheduler obtains and calls the specific execution logic (program codes) of the rescheduling policy by calling other a priori knowledge and combining the policy identification, thereby completing the process of configuring the rescheduling policy.

The step of configuring at least two rescheduling policies according to the user configuration information may be performed synchronously for each rescheduling policy, or each rescheduling policy may be configured sequentially based on a queue, which is not limited here.

Further, after the at least two rescheduling policies are configured, the rescheduler already has the capability of using the rescheduling policies to generate the instance rescheduling task. When the rescheduler detects that a trigger condition corresponding to a certain rescheduling policy is satisfied, the rescheduling policy is triggered, the processing logic corresponding to the rescheduling policy is executed, and the corresponding instance rescheduling task is generated by combining the running data of the resource cluster. In the at least two rescheduling policies in this embodiment, at least one rescheduling policy (that is, a target rescheduling policy) corresponds to an independent trigger condition. Therefore, when the independent trigger condition corresponding to the target rescheduling policy is met, the target rescheduling policy is executed. Furthermore, in a possible implementation, in the at least two rescheduling policies, one or more rescheduling policies (that is, the target rescheduling policy) have independent trigger conditions, while at least two other rescheduling policies (that is, non-target rescheduling policies) share a non-independent trigger condition. Specifically, for example, the rescheduling policy D1 corresponds to an independent trigger condition Trigger_1; the rescheduling policy D2 corresponds to an independent trigger condition Trigger_2; and the rescheduling policy D3 and a rescheduling policy D4 correspond to a non-independent trigger condition Trigger_3. In the above example, the rescheduling policy D1 and the rescheduling policy D2 may be target rescheduling policies, while the rescheduling policy D3 is a non-target rescheduling policy. In another possible implementation, in the at least two rescheduling policies, each of the rescheduling policies has an independent trigger condition, for example, the rescheduling policy D1 corresponds to an independent trigger condition Trigger_1; the rescheduling policy D2 corresponds to an independent trigger condition Trigger_2; and a rescheduling policy D3 corresponds to an independent trigger condition Trigger_3. Then, the rescheduling policy D1, the rescheduling policy D2, and the rescheduling policy D3 may all be used as target rescheduling policies.

Further, in a possible implementation, each rescheduling policy corresponds to at least one independent trigger condition, for example, the rescheduling policy D1 has two independent trigger conditions, which are an independent trigger condition Trigger_1 and an independent trigger condition Trigger_2, respectively. In another possible implementation, the independent trigger condition is a combined trigger condition that simultaneously meets at least two sub-trigger conditions, for example, the rescheduling policy D1 has an independent trigger condition rTrigger_1, where the independent trigger condition rTrigger_1 is a combined trigger condition composed of two sub-trigger conditions, namely, [Trigger_1] and [Trigger_2], that is, the independent trigger condition rTrigger_1 is considered to be met only when both the sub-trigger conditions Trigger_1 and Trigger_2 are met. After that, exemplarily, the independent trigger conditions corresponding to each rescheduling policy are recorded in the user configuration information, and this embodiment further includes: after obtaining the user configuration information, configuring the independent trigger conditions corresponding to each rescheduling policy according to the user configuration information.

Further, the running data of the resource cluster is data used to represent the real-time running state of the resource nodes in the resource cluster, such as device information and load states of the resource nodes in the resource cluster, and connection relationships between the resource nodes. The device information may further include information such as hardware parameters, device location, and device temperature, and the load state may further include information such as memory load, processor load, and currently running instances. In short, the running data is information obtained by detecting the states of the resource nodes in the resource cluster, and the specific content may be set as needed, which is not limited here. After the independent trigger condition corresponding to the target rescheduling policy is met, the running data is processed based on the processing logic corresponding to the target rescheduling policy so that a corresponding instance rescheduling task, that is, the target instance rescheduling task, is generated. The target instance rescheduling task may at least indicate a group of corresponding source and destination resource nodes in the resource cluster, that is, the node from which the target instance is to be moved out and the node into which the target instance is to be moved in. In the subsequent processing steps, the target instance rescheduling task is executed to allocate the target instance from the source resource node to the destination resource node, thereby completing the resource rescheduling process and achieving the rescheduling target corresponding to the target rescheduling policy.

Further, in a possible implementation, as shown in Fig. 3, a specific implementation of step S102 includes the following steps.

Step S1021: detecting the running data of the resource cluster and determining a rescheduling type corresponding to the target rescheduling policy.

Step S1022: obtaining a target instance and the source resource node where the target instance is located according to the rescheduling type corresponding to the target rescheduling policy.

Step S1023: obtaining the destination resource node according to the target instance and the source resource node.

Step S1024: generating the target instance rescheduling task based on the target instance, the source resource node, and the destination resource node.

Exemplarily, first, the independent trigger conditions corresponding to the rescheduling policy may be stored in a pair, for example, a trigger condition and a policy identification of the corresponding rescheduling policy are stored in the form of a key-value pair. The rescheduler determines a rescheduling policy corresponding to a trigger condition, that is, the target rescheduling policy, based on a mapping relationship between the trigger condition and the corresponding rescheduling policy when detecting that the running data meets the trigger condition by detecting information such as system time and external input instructions in real time. After that, a rescheduling type corresponding to the target rescheduling policy is determined based on the policy identification or other attribute information of the target rescheduling policy, where the rescheduling type is a component divided based on the rescheduling target, for example, including hotspot dispersion, load balancing, defragmentation, and the like. After that, the target instance and the source resource node where the target instance is located are obtained according to the rescheduling type and by combining preconfigured mapping information and the running data. Still after that, with the target instance and the source resource node where the target instance is located as input parameters, the input parameters are input into a corresponding scheduling algorithm so that a resource node that matches the target instance and the source resource node, that is, the destination resource node, is determined. There are various implementation manners for matching the target instance and the source resource node. For example, the destination resource node is determined based on the principle of instance migration cost and minimal impact on services so that the purpose of reducing fluctuations of the services provided by the resource cluster is achieved. Alternatively, a resource node in the cluster that does not exceed the load limit and is closest to the load limit after carrying the target instance is determined as the destination resource node so that the overall utilization efficiency of the resource cluster is improved and resource fragmentation is reduced. Specifically, the destination resource node may be configured as needed, which will not be repeated here. Finally, the target instance rescheduling task is generated based on the target instance, the source resource node, and the destination resource node that are determined in the above steps, and the scheduling task may be considered as a rescheduling task that needs to be executed currently (or at a predicted time point).

Further, in a possible implementation, the rescheduler may call a plugin-type detector (a software functional unit) to perform the above steps. Optionally, this embodiment further includes the following step.

Step S100A: calling a detector interface corresponding to the target rescheduling policy.

Correspondingly, an execution process of steps S1021 to S1024 includes the following steps.

The detector interface corresponding to the target rescheduling policy is called so that the running data of the resource cluster is detected by the detector corresponding to the target rescheduling policy, the rescheduling type corresponding to the target rescheduling policy is determined, and the target instance and the source resource node where the target instance is located are obtained according to the rescheduling type. The detector is used to determine the source resource node that matches the rescheduling target. The destination resource node is obtained according to the target instance and the source resource node. The target instance rescheduling task is generated based on the target instance, the source resource node, and the destination resource node.

Exemplarily, the detector is a software functional unit running in the rescheduler or a software functional unit implemented by the rescheduler by accessing an external service or program. The detector corresponds to the rescheduling policy, that is, different rescheduling policies have corresponding detectors. After determining the target rescheduling policy, the rescheduler dynamically calls a matched detector to perform the step of obtaining the target instance and the source resource node where the target instance is located.

Further, in a possible implementation, the rescheduler may call a plugin-type algorithm unit (a software functional unit) to determine a target algorithm so that the destination resource node is determined based on the target algorithm, that is, the above step S1024 is executed. Optionally, this embodiment further includes the following step.

Step S100B: calling a target rescheduling algorithm service corresponding to the target rescheduling policy, where the target algorithm is used to determine a destination resource node that matches the rescheduling target.

Correspondingly, the algorithm unit is a software functional unit configured to provide and execute a rescheduling algorithm. Similar to the detector, the algorithm unit may be a software functional unit running in the rescheduler, or may be a software functional unit implemented by the rescheduler by accessing an external service or program. The rescheduling algorithm (that is, the target algorithm) provided by the algorithm unit may determine the corresponding destination resource node based on the target instance and the source resource node.

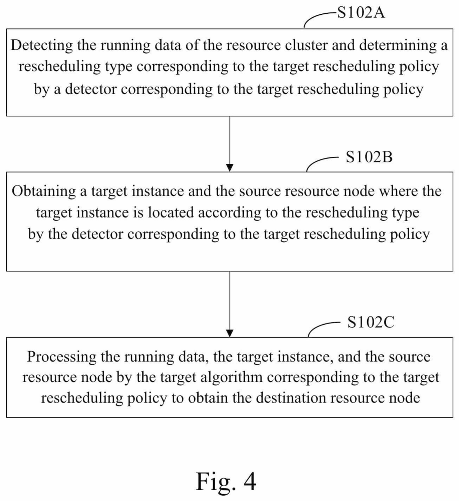

Correspondingly, based on the architecture of the rescheduler, as shown in Fig. 4, a specific implementation of step S102 includes the following steps.

Step S102A: detecting the running data of the resource cluster and determining a rescheduling type corresponding to the target rescheduling policy by a detector corresponding to the target rescheduling policy.

Step S102B: obtaining a target instance and the source resource node where the target instance is located according to the rescheduling type by the detector corresponding to the target rescheduling policy.

Step S102C: processing the running data, the target instance, and the source resource node by the target algorithm corresponding to the target rescheduling policy to obtain the destination resource node.

Exemplarily, different rescheduling policies are configured with different rescheduling algorithm services for determining the destination resource node that matches the corresponding rescheduling target. In the steps of this embodiment, after the target rescheduling policy is determined, the plugin-type detector and the algorithm unit are correspondingly called to predict the target instance, the source resource node, and the destination resource node, and the target instance rescheduling task is generated so that the target instance rescheduling task matches the target rescheduling policy more. Meanwhile, the detector and the algorithm unit (target algorithm) with hot pluggable characteristics perform the above process so that the beneficial effects of improving the configuration flexibility and running efficiency of the rescheduler are achieved.

Further, the rescheduling target includes one of the following: load balancing, network bandwidth balancing, and defragmentation.

When the rescheduling target is load balancing or network bandwidth balancing, the rescheduling algorithm service is used to select, as the destination resource node, a resource node whose load in the resource cluster is less than or equal to a first threshold.

When the rescheduling target is defragmentation, the rescheduling algorithm service is used to select, as the destination resource node, a resource node whose deployment efficiency for the target instance in the resource cluster is greater than or equal to a second threshold.

Exemplarily, this embodiment further provides an implementation of using the corresponding second processing logic (corresponding scheduling algorithm) to generate the destination resource node for different rescheduling targets, that is, for the rescheduling targets of load balancing or network bandwidth balancing, the scheduling algorithm (target algorithm) provided by the algorithm unit corresponding to the first rescheduling policy is adopted. The running data of the resource cluster is detected, and a resource node, that is, a low-load node, whose load in the resource cluster is less than or equal to the first threshold is determined as the destination resource node for receiving the instance. For the rescheduling target of defragmentation, the scheduling algorithm provided by the algorithm unit corresponding to the second rescheduling policy is adopted. The running data of the resource cluster is detected, and a resource node, that is, a node with high deployment efficiency, whose deployment efficiency for the target instance in the resource cluster is greater than or equal to the second threshold is determined as the destination resource node. The node with high deployment efficiency may be determined by detecting information in a plurality of dimensions such as data transmission speed, network delay, and disk read/write speed between different resource nodes, and the node with high deployment efficiency may usually be selected by an intelligent scheduling algorithm, which will not be described in detail here.

Further, after the target instance rescheduling task is generated based on the above steps, the rescheduler and a scheduler work together to schedule according to the target instance, the source resource node, and the destination resource node indicated by the target instance rescheduling task so that the rescheduling process based on the target rescheduling policy may be completed, where the rescheduler removes the target instance from the source resource node, and the scheduler schedules a new instance to the destination resource node.

In this embodiment, at least two rescheduling policies are configured according to user configuration information, where each of the rescheduling policies is used to generate an instance rescheduling task for achieving a different rescheduling target; a target instance rescheduling task is generated based on a target rescheduling policy and running data of a resource cluster when an independent trigger condition corresponding to the target rescheduling policy is met, where the running data is used to represent a real-time running state of resource nodes in the resource cluster, and the target instance rescheduling task is at least used to indicate a group of a corresponding source resource node and a corresponding destination resource node in the resource cluster; and the target instance rescheduling task is executed to reschedule a target instance running in the source resource node to the destination resource node. By configuring more than two rescheduling policies for achieving different rescheduling targets and triggering the rescheduling policies based on the independent trigger condition, the corresponding instance rescheduling task is generated and executed so that the rescheduling policies in which a plurality of dimensions coexist and which may be triggered independently are implemented, thereby improving the performance and efficiency of resource rescheduling of the resource cluster, and further improving the overall quality of the resource cluster.

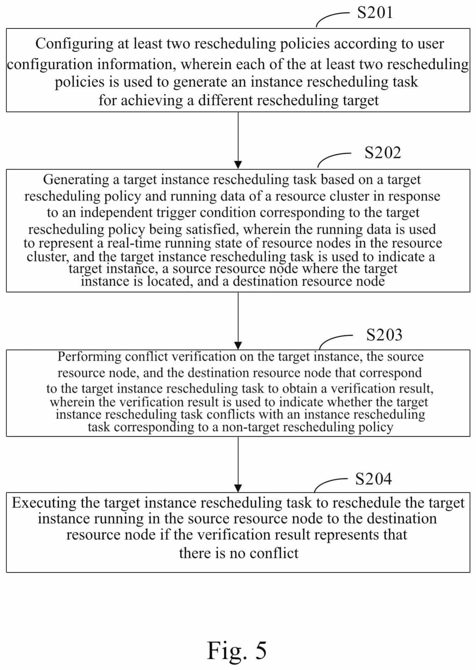

Fig. 5 is a second schematic flowchart of a resource rescheduling method provided by an embodiment of the present disclosure. On the basis of the embodiment shown in Fig. 2, this embodiment further adds a conflict verification step, and the resource rescheduling method includes the following steps.

Step S201: configuring at least two rescheduling policies according to user configuration information, wherein each of the at least two rescheduling policies is used to generate an instance rescheduling task for achieving a different rescheduling target.

Step S202: generating a target instance rescheduling task based on a target rescheduling policy and running data of a resource cluster in response to an independent trigger condition corresponding to the target rescheduling policy being satisfied, wherein the running data is used to represent a real-time running state of resource nodes in the resource cluster, and the target instance rescheduling task is used to indicate a target instance, a source resource node where the target instance is located, and a destination resource node.

Step S203: performing conflict verification on the target instance, the source resource node, and the destination resource node that correspond to the target instance rescheduling task to obtain a verification result, wherein the verification result is used to indicate whether the target instance rescheduling task conflicts with an instance rescheduling task corresponding to a non-target rescheduling policy.

Step S204: executing the target instance rescheduling task to reschedule the target instance running in the source resource node to the destination resource node if the verification result represents that there is no conflict.

Exemplarily, in this embodiment, because the rescheduling policies are configured according to the user configuration information, an additional technical problem is introduced as compared with the existing single rescheduling policy, that is, the problem of possible conflicts between the rescheduling policies. To solve this problem, in this embodiment, after the target instance rescheduling task is obtained based on the target rescheduling policy, the target instance rescheduling task is first verified. Specifically, the conflict verification is performed on the target instance, the source resource node, and the destination resource node that correspond to the target instance rescheduling task so that the verification result used to indicate whether the target instance rescheduling task conflicts with the instance rescheduling task corresponding to the non-target rescheduling policy is obtained, where the verification result includes at least a first verification result representing that there is a conflict and a second verification result representing that there is no conflict. When the verification result is the second verification result, that is, the verification result represents that there is no conflict between the target instance rescheduling task and the instance rescheduling task corresponding to the non-target rescheduling policy, the target instance rescheduling task may be directly executed based on the subsequent steps. Otherwise, if the verification result is the first verification result, the verification result represents that there is a conflict between the target instance rescheduling task and the instance rescheduling task corresponding to the non-target rescheduling policy. Exemplarily, the existence of the conflict means that after the target instance rescheduling task is executed, that is, after the running location of the target instance moves and the loads of the source resource node and the destination resource node change, other rescheduling policies will be invalid or the targets of other rescheduling policies will be negatively affected. Specifically, for example, the target instance rescheduling task is an instance rescheduling task generated based on a rescheduling policy A, and a rescheduling target corresponding to the rescheduling policy A is load balancing. Meanwhile, the rescheduling policies configured according to the user configuration information further include a rescheduling policy B, and a rescheduling target corresponding to the rescheduling policy B is defragmentation. When the rescheduler determines that after the target instance rescheduling task is executed, fragmentation in the source resource node or the destination resource node will increase or the amount of fragmentation will exceed a preset threshold (that is, the verification of the rescheduling policy B for the target instance rescheduling task fails), it indicates that there is a conflict; otherwise, there is no conflict.

Further, the first verification result representing that there is a conflict includes at least one of the following: a source resource node conflict, a destination resource node conflict, and a target instance conflict. Exemplarily, the source resource node conflict is a conflict type that causes the corresponding rescheduling policy to be invalid due to the source resource node. For example, in the previous example, the rescheduling target corresponding to the rescheduling policy A is load balancing, and the rescheduling target corresponding to the rescheduling policy B is defragmentation. When the current load of the destination resource node generated by the rescheduling policy B is too high, the verification result of the policy A cannot be passed, and this verification result is the destination resource node conflict. The meanings of the destination resource node conflict and the target instance conflict are similar, and will not be repeated.

In this embodiment, with the specific implementation of the verification result being detailed, the reason for the conflict between different rescheduling policies may be further determined, thereby providing a basis for optimizing the rescheduling policies and achieving the beneficial effect of improving the configuration efficiency of the cluster.

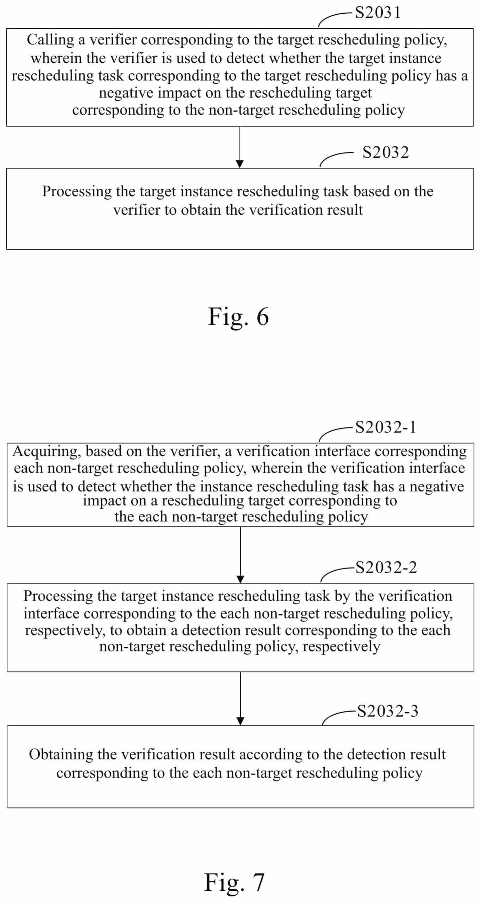

Exemplarily, as shown in Fig. 6, a specific implementation of step S203 includes the following steps.

Step S2031: calling a verifier corresponding to the target rescheduling policy, wherein the verifier is used to detect whether the target instance rescheduling task corresponding to the target rescheduling policy has a negative impact on the rescheduling target corresponding to the non-target rescheduling policy.

Step S2032: processing the target instance rescheduling task based on the verifier to obtain the verification result.

Exemplarily, in this embodiment, the step of verifying the target instance rescheduling task may be implemented by calling a plugin-type verifier. Specifically, first, after acquiring the target rescheduling policy, the rescheduler correspondingly acquires the verifier corresponding to the target rescheduling policy. The verifier is configured to provide third processing logic for detecting whether the target instance rescheduling task corresponding to the target rescheduling policy will have a negative impact on the rescheduling target corresponding to the non-target rescheduling policy. After that, the third processing logic is executed by the verifier so that the verification result is obtained. The third processing logic provided by the verifier is for the target instance rescheduling task corresponding to the target rescheduling policy. Therefore, there is a correspondence between the verifier and the target rescheduling policy, that is, the rescheduler needs to call the matched verifier based on the target rescheduling policy.

Further, as shown in Fig. 7, a specific implementation of step S2032 includes the following steps.

Step S2032-1: acquiring, based on the verifier, a verification interface corresponding to each non-target rescheduling policy, wherein the verification interface is used to detect whether the instance rescheduling task has a negative impact on a rescheduling target corresponding to the each non-target rescheduling policy.

Step S2032-2: processing the target instance rescheduling task by the verification interface corresponding to the each non-target rescheduling policy, respectively, to obtain a detection result corresponding to the each non-target rescheduling policy, respectively.

Step S2032-3: obtaining the verification result according to the detection result corresponding to the each non-target rescheduling policy.

Exemplarily, the verifier first acquires the verification interface corresponding to each non-target rescheduling policy, respectively. For example, the user configuration information configures three rescheduling policies, which are a rescheduling policy A, a rescheduling policy B, and a rescheduling policy C, respectively. When the rescheduling policy A is triggered as the target rescheduling policy, the rescheduling policy B and the rescheduling policy C are correspondingly non-target rescheduling policies. Each rescheduling policy has a corresponding verification interface, and the verification interface is used to detect whether the instance rescheduling task will have a negative impact on the rescheduling target corresponding to the non-target rescheduling policy. The verification interface corresponding to the non-target rescheduling policy is called to verify the impact of the target instance rescheduling task on each non-target rescheduling policy, and the verification result is obtained.

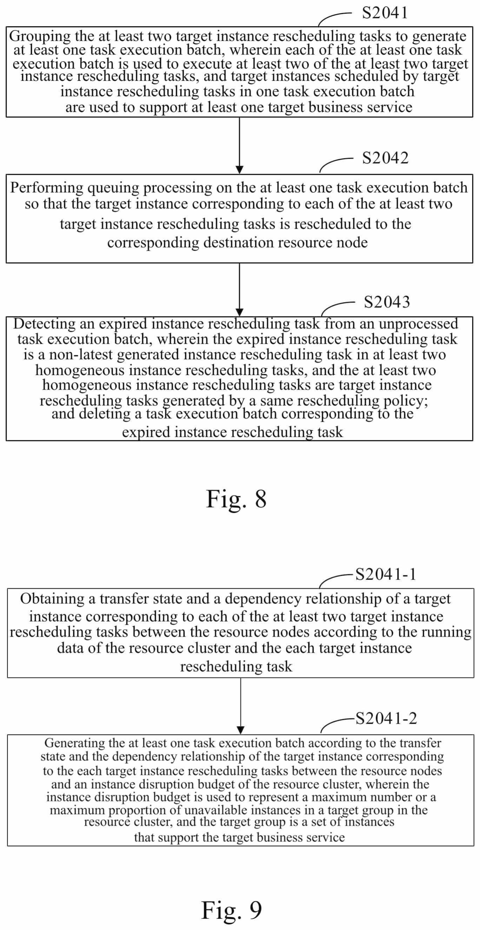

Further, in a possible implementation, the target instance rescheduling task includes at least two instance rescheduling tasks. As shown in Fig. 8, a specific implementation of step S204 includes the following steps.

Step S2041: grouping the at least two target instance rescheduling tasks to generate at least one task execution batch, wherein each of the at least one task execution batch is used to execute at least two of the at least two target instance rescheduling tasks, and target instances scheduled by target instance rescheduling tasks in one task execution batch are used to support at least one target business service.

Step S2042: performing queuing processing on the at least one task execution batch so that the target instance corresponding to each of the at least two target instance rescheduling tasks is rescheduled to the corresponding destination resource node.

Exemplarily, after the target instance rescheduling task is obtained, when there are a plurality of target instance rescheduling tasks that need to be executed by the rescheduler, the target instance rescheduling tasks are grouped so that at least one task execution batch is generated. The target instances scheduled (closed) by the instance rescheduling tasks in the same task execution batch all correspond to at least one target business service. After the task execution batch is completed, it is necessary to ensure the stable operation of the target business service (which may include one business service or a plurality of business services), and there will be no problem of abnormal operation of the target business service caused by excessive closing of the target instances supporting the target business service. Therefore, in a possible implementation, a maximum length of the task execution batch is set, and the target instance rescheduling tasks are grouped based on the maximum length so that the task execution batch is generated. After that, the queuing processing is performed based on the task execution batch, and in each process of processing the task execution batch, each target instance rescheduling task in the task execution batch is consumed in parallel or serially so that the target instance corresponding to the each target instance rescheduling task is rescheduled from the corresponding source resource node to the destination resource node.

Further, as shown in Fig. 9, a specific implementation of step S2041 includes the following steps.

Step S2041-1: obtaining a transfer state and a dependency relationship of a target instance corresponding to each of the at least two target instance rescheduling tasks between the resource nodes according to the running data of the resource cluster and the each target instance rescheduling task.

Step S2041-2: generating the at least one task execution batch according to the transfer state and the dependency relationship of the target instance corresponding to the each target instance rescheduling tasks between the resource nodes and an instance disruption budget of the resource cluster, wherein the instance disruption budget is used to represent a maximum number or a maximum proportion of unavailable instances in a target group in the resource cluster, and the target group is a set of instances that support the target business service.

Exemplarily, the steps of this embodiment specifically introduce the specific implementation of generating the task execution batch. Specifically, first, the transfer relationship of the target instance between the source resource node and the destination resource node and the dependency relationship between all the resource nodes including the source resource node and the destination resource node are obtained according to the running data of the resource cluster obtained previously and each of the target instance rescheduling tasks. After that, a set of target instances supporting the same business service is determined according to the transfer state and the dependency relationship of the target instance corresponding to each of the target instance rescheduling tasks between the resource nodes, and one or more task execution batches are generated based on the target instance rescheduling tasks involved in the target instances supporting the at least one target business service. In this process, the batch grouping process needs to be controlled in combination with the instance disruption budget (Pod Disruption Budget, PDB) corresponding to the target group in the resource cluster, where the target group is a set of instances supporting the target business service, so as to avoid excessive interrupted instances at one time that may affect the normal operation of or cause fluctuations in the related business service. The task execution batch generated based on the above method satisfies the largest number of target instance scheduling tasks in a single task execution batch and the smallest total number of task execution batches, thereby maximizing the scheduling efficiency.

Further, optionally, step S204 further includes the following steps.

Step S2043: detecting an expired instance rescheduling task from an unprocessed task execution batch, wherein the expired instance rescheduling task is a non-latest generated instance rescheduling task in at least two homogeneous instance rescheduling tasks, and the at least two homogeneous instance rescheduling tasks are target instance rescheduling tasks generated by a same rescheduling policy, and deleting a task execution batch corresponding to the expired instance rescheduling task.

Exemplarily, in the process of executing instance scheduling, based on the target instance rescheduling task, the target instance is first deleted, and then the newly created target instance is scheduled to the destination resource node, thereby achieving the effect of scheduling the instance. Based on the introduction of the above steps, in order to improve the stability of the resource cluster, the instance rescheduling tasks will be packaged into task execution batches for batch execution. In this process, the problem of policy timeliness will occur, that is, there will be a case where the instance rescheduling task for the target rescheduling policy has not been executed, and there is a new instance rescheduling task (that is, a homogeneous instance task) for the target rescheduling policy. In this case, in this embodiment, the expired instance rescheduling task in the unprocessed task execution batch is detected, and the expired instance rescheduling task is deleted from the unprocessed task execution batch, thereby avoiding the execution of the invalid instance rescheduling task. Thus, the number of invalid scheduling of the resource cluster is reduced, and the overall scheduling efficiency of the resource cluster is improved.

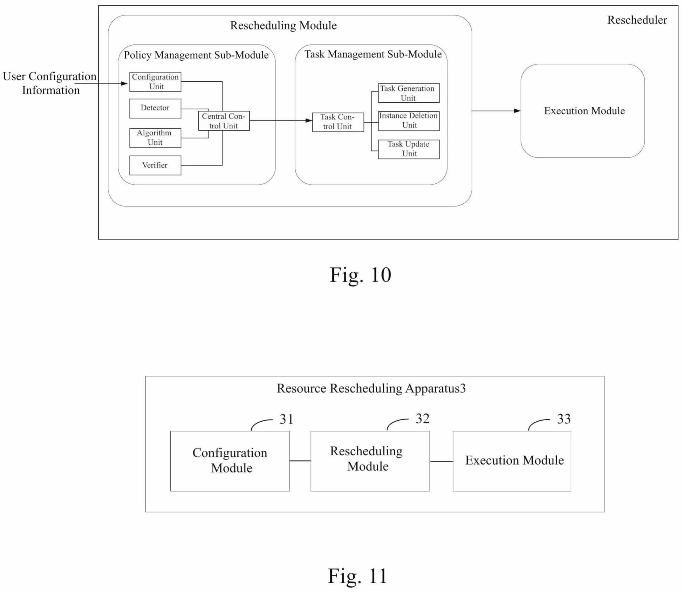

Fig. 10 is a schematic architectural diagram of a rescheduler according to an embodiment of the present disclosure. The resource rescheduling method provided in the above embodiments is introduced below with reference to Fig. 10. As shown in Fig. 5, exemplarily, the rescheduler includes a rescheduling module and an execution module, where the rescheduling module further includes a policy management sub-module and a task management sub-module. First, the policy management sub-module is an algorithm and policy control center, and is mainly responsible for configuring rescheduling policies, detecting migration conditions, executing corresponding algorithms, and outputting movement decisions to the task management sub-module. The policy management sub-module includes a central control unit, and a configuration unit, a detector, an algorithm unit, and a verifier that communicate with the central control unit, where the detector, the algorithm unit, and the verifier may implement plugin-style hot plugging. The central control unit is responsible for controlling the overall process of the policy management sub-module, and uses the capabilities provided by related modules to output a globally optimal or locally better placement result. The configuration unit is used to receive user configuration information input from the outside and configure rescheduling policies in the central control unit. The detector is used to detect related information such as the cluster, nodes, and instances according to the running data of the resource cluster, and evaluate whether a local migration condition is reached or global re-placement is required, and then perform scheduling planning. The algorithm unit is used to find a most suitable destination resource node according to the nodes and instances output by the detector. The detector and the algorithm unit are units (interfaces) that must be provided in each rescheduling policy, and different rescheduling policies correspond to different processing logics. After the instance rescheduling task is obtained according to the algorithm unit, the verifier is used to detect the instance rescheduling task to avoid conflicts with the rescheduling policy. For example, the verifier checks whether there is a risk of overloading after the destination resource node executes the rescheduling task. In the case where the detection succeeds and there is no conflict, the verifier sends an instruction to the task management sub-module to trigger subsequent steps.

Further, the task management sub-module is used for sorting and executing the instance rescheduling tasks, and is responsible for reporting the latest recommendation results and deleting expired recommendation results. The task management sub-module includes a task control unit, and a task generation unit, an instance deletion unit, and a task update unit that communicate with the task control unit. The task generation unit is used to perform batch processing on all the instance rescheduling tasks (that is, movement decisions) based on a decision algorithm according to the transfer relationship of the instances between the nodes and the instance disruption budget limit. The instance rescheduling tasks in the same batch are constructed into one task execution batch (Movement). The objective is that the more instances in a single task execution batch, the better, and the fewer the total number of task execution batches, the better. A possible implementation step of the decision algorithm includes the following steps.

Step1: Modeling. Specifically, a directed graph is established according to the transfer state and the dependency relationship of the instances between the resource nodes.

Step2: Decomposition. Specifically, node contraction is performed on cycles with interdependent relationship in the directed graph to obtain a directed acyclic graph (DAG).

Step3: Construction. Specifically, edge sets are selected from the processed directed acyclic graph in reverse topological order of the nodes, and the task execution batches are constructed in units of the edge sets. Without destroying the stability of the cluster (for example, without violating the instance disruption budget), the more rescheduling tasks added to a task execution batch, the better. However, if a rescheduling task cannot be added to any task execution batch due to the limitation of the instance disruption budget, all the rescheduling tasks in this batch will fail and be sent back.

Step4: Reporting. Specifically, for a task execution batch that is successfully constructed, its movement decision is grouped according to the owner of the instance and reported to the application (Apiserver) in the form of a custom resource definition (Custom Resource Definition, CDR).

Further, the instance deletion unit is used to delete the target instance. Specifically, after the task generation unit generates one or more task execution batches, the instance deletion unit needs to serially process all the task execution batches in sequence, and the processing of each task execution batch is to delete the instance in the associated instance rescheduling task. Optionally, in order to ensure the stability of the cluster, the deletion operation is performed through the Eviction interface. The task update unit is used to delete an old instance rescheduling task before each rescheduling policy generates and executes a new instance rescheduling task, thereby ensuring that the latest recommendation result (that is, the instance rescheduling task generated based on the target rescheduling policy) is used when scheduling is performed. Finally, the task management sub-module sequentially sends the task execution batches to the execution module, and the execution module executes scheduling for the resource cluster to reschedule the target instance in the newly created source resource node to the destination resource node. The specific implementation of the execution module is prior art and will not be repeated here.

In this embodiment, the implementation of step S201 is the same as the implementation of step S101 in the embodiment shown in Fig. 2 of the present disclosure, which will not be repeated here.

Corresponding to the resource rescheduling method of the above embodiments, Fig. 11 is a structural block diagram of a resource rescheduling apparatus according to an embodiment of the present disclosure. The method introduced in the above embodiments may be performed by the resource rescheduling apparatus, and the apparatus may be implemented by software and/or hardware. The apparatus may be integrated into an electronic device with a certain data processing capability. The electronic device may include, but is not limited to, a mobile terminal with big data processing capability, and a fixed terminal with big data processing capability such as a desktop computer and a supercomputer.

For ease of description, only parts related to the embodiments of the present disclosure are shown. Referring to Fig. 11, the resource rescheduling apparatus 3 includes: a configuration module 31, configured to configure at least two rescheduling policies according to user configuration information, where each of the rescheduling policies is used to generate an instance rescheduling task for achieving a different rescheduling target; a rescheduling module 32, configured to generate a target instance rescheduling task based on a target rescheduling policy and running data of a resource cluster in response to an independent trigger condition corresponding to the target rescheduling policy being satisfied, where the running data is used to represent a real-time running state of resource nodes in the resource cluster, and the target instance rescheduling task is at least used to indicate a group of a corresponding source resource node and a corresponding destination resource node in the resource cluster; and an execution module 33, configured to execute the target instance rescheduling task to reschedule a target instance running in the source resource node to the destination resource node.

According to one or more embodiments of the present disclosure, each of the rescheduling policies corresponds to at least one independent trigger condition; and/or the independent trigger condition is a combined trigger condition that requires at least two sub-trigger conditions to be satisfied simultaneously. The configuration module 31 is further configured to configure the independent trigger condition corresponding to each of the rescheduling policies according to the user configuration information.

According to one or more embodiments of the present disclosure, when generating the target instance rescheduling task based on the target rescheduling policy and the running data of the resource cluster, the rescheduling module 32 is further configured to call a detector interface corresponding to the target rescheduling policy; detect the running data of the resource cluster by a detector corresponding to the target rescheduling policy; determine a rescheduling type corresponding to the target rescheduling policy; and obtain a target instance and a source resource node where the target instance is located according to the rescheduling type, where the detector is used to determine a source resource node that matches the rescheduling target; obtain a destination resource node according to the target instance and the source resource node; and generate the target instance rescheduling task based on the target instance, the source resource node, and the destination resource node.

According to one or more embodiments of the present disclosure, when obtaining the destination resource node according to the target instance and the source resource node, the rescheduling module 32 is further configured to call a target rescheduling algorithm service corresponding to the target rescheduling policy; and process the running data, the target instance, and the source resource node by the target rescheduling algorithm service so that the destination resource node is obtained. Different rescheduling policies are configured with different rescheduling algorithm services for determining the destination resource node that matches the corresponding rescheduling target.

According to one or more embodiments of the present disclosure, the rescheduling target includes one of the following: load balancing, network bandwidth balancing, and defragmentation. When the rescheduling target is load balancing or network bandwidth balancing, the rescheduling algorithm service is used to select, as the destination resource node, a resource node whose load in the resource cluster is less than or equal to a first threshold. When the rescheduling target is defragmentation, the rescheduling algorithm service is used to select, as the destination resource node, a resource node whose deployment efficiency for the target instance in the resource cluster is greater than or equal to a second threshold.

According to one or more embodiments of the present disclosure, the target instance rescheduling task is used to indicate a target instance, a source resource node where the target instance is located, and a destination resource node. Before the target instance rescheduling task is executed, the rescheduling module 32 is further configured to perform conflict verification on the target instance, the source resource node, and the destination resource node that correspond to the target instance rescheduling task so that a verification result is obtained, where the verification result is used to indicate whether the target instance rescheduling task conflicts with an instance rescheduling task corresponding to a non-target rescheduling policy. The execution module 33 is further configured to execute the target instance rescheduling task if the verification result represents that there is no conflict. The verification result includes at least a first verification result representing that there is a conflict, and the first verification result includes at least one of the following: a source resource node conflict, a destination resource node conflict, and a target instance conflict.

According to one or more embodiments of the present disclosure, when performing conflict verification on the target instance, the source resource node, and the destination resource node that correspond to the target instance rescheduling task so that the verification result is obtained, the rescheduling module 32 is further configured to call a verifier corresponding to the target rescheduling policy, where the verifier is used to detect whether the target instance rescheduling task corresponding to the target rescheduling policy will have a negative impact on a rescheduling target corresponding to the non-target rescheduling policy; and process the target instance rescheduling task based on the verifier so that the verification result is obtained.

According to one or more embodiments of the present disclosure, when processing the target instance rescheduling task based on the verifier so that the verification result is obtained, the rescheduling module 32 is further configured to acquire, based on the verifier, verification interfaces corresponding to the non-target rescheduling policies, respectively, where the verification interfaces are used to detect whether the instance rescheduling task will have a negative impact on the rescheduling target corresponding to the non-target rescheduling policies; process the target instance rescheduling task by the verification interfaces corresponding to the non-target rescheduling policies, respectively, so that detection results corresponding to the non-target rescheduling policies, respectively, are obtained; and obtain the verification result according to the detection results corresponding to the non-target rescheduling policies.

According to one or more embodiments of the present disclosure, there are at least two target instance rescheduling tasks, and the execution module 33 is further configured to group the target instance rescheduling tasks so that at least one task execution batch is generated, where each of the task execution batches is used to execute at least two target instance rescheduling tasks, and the target instances scheduled by the target instance rescheduling tasks in a same task execution batch are used to support at least one target business service; and perform queuing processing on the task execution batches so that the target instances corresponding to the target instance rescheduling tasks are rescheduled to the corresponding destination resource nodes.

According to one or more embodiments of the present disclosure, when grouping the target instance rescheduling tasks so that the at least one task execution batch is generated, the execution module 33 is further configured to obtain transfer states and dependency relationships of the target instances corresponding to the target instance rescheduling tasks between the resource nodes according to the running data of the resource cluster and the target instance rescheduling tasks; and generate the at least one task execution batch according to the transfer states and the dependency relationships of the target instances corresponding to the target instance rescheduling tasks between the resource nodes and an instance disruption budget of the resource cluster, where the instance disruption budget is used to represent a maximum number or a maximum proportion of unavailable instances in a target group in the resource cluster, and the target group is a set of instances supporting the target business service.

According to one or more embodiments of the present disclosure, the execution module 33 is further configured to detect an expired instance rescheduling task from unprocessed task execution batches, where the expired instance rescheduling task is a non-latest generated instance rescheduling task in at least two homogeneous instance rescheduling tasks, and the homogeneous instance rescheduling tasks are target instance rescheduling tasks for scheduling a same target instance; and delete a task execution batch corresponding to the expired instance rescheduling task.

The configuration module 31, the rescheduling module 32, and the execution module 33 are connected in sequence. The resource rescheduling apparatus 3 provided in this embodiment may execute the technical solutions of the above method embodiments, and the implementation principles and technical effects thereof are similar, and details are not repeated here in this embodiment.

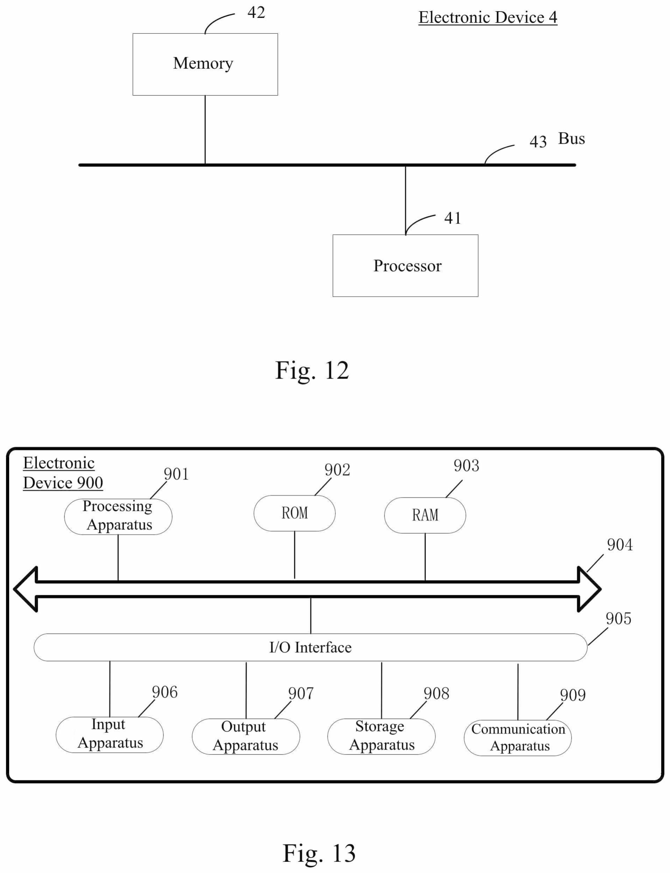

Fig. 12 is a schematic structural diagram of an electronic device according to an embodiment of the present disclosure. As shown in Fig. 12, the electronic device 4 includes: a processor 41, and a memory 42 communicatively connected to the processor 41; where the memory 42 stores a computer-executable instruction; and the processor 41 executes the computer-executable instruction stored in the memory 42 to implement the resource rescheduling method in the embodiments shown in Fig. 2 to Fig. 10.

Optionally, the processor 41 and the memory 42 are connected through a bus 43.

Relevant descriptions may be understood by referring to relevant descriptions and effects corresponding to the steps in the embodiments corresponding to Fig. 2 to Fig. 10, and details are not repeated here.

An embodiment of the present disclosure provides a non-transitory computer-readable storage medium, where a computer-executable instruction is stored in the computer-readable storage medium, and when the computer-executable instruction is executed by a processor, the resource rescheduling method provided by any one of the embodiments corresponding to Fig. 2 to Fig. 10 of the present disclosure is implemented.

An embodiment of the present disclosure provides a computer program product, including a computer program, where when the computer program is executed by a processor, the resource rescheduling method provided by any one of the embodiments corresponding to Fig. 2 to Fig. 10 of the present disclosure is implemented.

In order to implement the above embodiments, an embodiment of the present disclosure further provides an electronic device.

Reference is made to Fig. 13, which illustrates a schematic structural diagram of an electronic device 900 suitable for implementing the embodiments of the present disclosure. The electronic device 900 may be a terminal device or a server. The terminal device may include, but is not limited to, mobile terminals such as a mobile phone, a notebook computer, a digital broadcast receiver, a personal digital assistant (abbreviated as PDA), a tablet computer, a portable media player (abbreviated as PMP), and a vehicle-mounted terminal (such as a vehicle navigation terminal), and fixed terminals such as a digital TV and a desktop computer. The electronic device shown in Fig. 13 is only an example and should not impose any limitation on the function and the range of use of the embodiments of the present disclosure.

As shown in Fig. 13, the electronic device 900 may include a processing apparatus (such as a central processing unit and a graphics processing unit) 901 that may perform various appropriate actions and processing according to a program stored in a read-only memory (abbreviated as ROM) 902 or a program loaded from a storage apparatus 908 into a random access memory (abbreviated as RAM) 903. The RAM 903 further stores various programs and data required for operations of the electronic device 900. The processing apparatus 901, the ROM 902, and the RAM 903 are connected to each other through a bus 904. An input/output (I/O) interface 905 is also connected to the bus 904.

Usually, the following apparatuses may be connected to the I/O interface 905: an input apparatus 906 including, for example, a touch screen, a touchpad, a keyboard, a mouse, a camera, a microphone, an accelerometer, and a gyroscope; an output apparatus 907 including, for example, a liquid crystal display (Liquid Crystal Display, LCD for short), a speaker, and a vibrator; the storage apparatus 908 including, for example, a magnetic tape and a hard disk; and a communication apparatus 909. The communication apparatus 909 may allow the electronic device 900 to perform wireless or wired communication with other devices to exchange data. Although Fig. 13 shows the electronic device 900 having various apparatuses, it should be understood that it is not necessary to implement or provide all the apparatuses shown. Alternatively, more or fewer apparatuses may be implemented or provided.

In particular, according to the embodiments of the present disclosure, the process described above with reference to the flowchart may be implemented as a computer software program. For example, the embodiments of the present disclosure include a computer program product, which includes a computer program carried on a computer-readable medium, where the computer program includes program codes for performing the method shown in the flowchart. In such an embodiment, the computer program may be downloaded and installed from a network through the communication apparatus 909, or installed from the storage apparatus 908, or installed from the ROM 902. When the computer program is executed by the processing apparatus 901, the above functions defined in the method of the embodiment of the present disclosure are executed.

It should be noted that the above computer-readable medium in the present disclosure may be a computer-readable signal medium, a computer-readable storage medium, or any combination thereof. The computer-readable storage medium may be, for example, but is not limited to, an electronic, magnetic, optical, electromagnetic, infrared, or semiconductor system, apparatus, device, or any combination thereof. More specific examples of the computer-readable storage medium may include, but are not limited to, an electrical connection having one or more wires, a portable computer magnetic disk, a hard disk, a random access memory (RAM), a read-only memory (ROM), an erasable programmable read-only memory (EPROM or a flash memory), an optical fiber, a portable compact disc read-only memory (CD-ROM), an optical storage device, a magnetic storage device, or any suitable combination thereof. In the present disclosure, the computer-readable storage medium may be any tangible medium that contains or stores a program, and the program may be used by or in combination with an instruction execution system, apparatus, or device. In the present disclosure, the computer-readable signal medium may include a data signal propagated on a baseband or as a part of a carrier, and computer-readable program codes are carried in the data signal. The data signal propagated in this way may be in multiple forms and includes, but is not limited to, an electromagnetic signal, an optical signal, or any suitable combination thereof. The computer-readable signal medium may also be any computer-readable medium other than the computer-readable storage medium, and the computer-readable signal medium may send, propagate, or transmit the program used by or in combination with the instruction execution system, apparatus, or device. The program codes contained on the computer-readable medium may be transmitted in any suitable medium, including but not limited to a wire, an optical cable, a radio frequency (RF), or any suitable combination thereof.

The above computer-readable medium may be contained in the above electronic device or may exist alone without being assembled into the electronic device.

The above computer-readable medium carries one or more programs, and when the one or more programs are executed by the electronic device, the electronic device is caused to execute the method shown in the above embodiments.

The computer program codes for executing the operations of the present disclosure may be written in one or more programming languages or a combination thereof. The above programming languages include object-oriented programming languages such as Java, Smalltalk, and C++, and further include conventional procedural programming languages such as "C" language or similar programming languages. The program codes may be completely executed on a computer of a user, partially executed on a computer of a user, executed as an independent software package, partially executed on a computer of a user and partially executed on a remote computer, or completely executed on a remote computer or a server. In the case involving the remote computer, the remote computer may be connected to the computer of the user through any kind of network, including a local area network (abbreviated as LAN) or a wide area network (abbreviated as WAN), or may be connected to an external computer (for example, connected through the Internet with the aid of an Internet service provider).

The flowcharts and block diagrams in the drawings illustrate the possibly implemented architectures, functions, and operations of the system, the method, and the computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The involved units or modules described in the embodiments of the present disclosure may be implemented by software or by hardware. The name of a unit or module does not constitute a limitation on the unit itself under certain circumstances.

The functions described above may be at least partially performed by one or more hardware logic components. For example, without limitation, exemplary types of the hardware logic components that may be used include: a field programmable gate array (FPGA), an application specific integrated circuit (ASIC), an application specific standard product (ASSP), a system on chip (SOC), a complex programmable logical device (CPLD), and the like.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection having one or more wires, a portable computer magnetic disk, a hard disk, a random access memory (RAM), a read-only memory (ROM), an erasable programmable read-only memory (EPROM or a flash memory), an optical fiber, a portable compact disc read-only memory (CD-ROM), an optical storage device, a magnetic storage device, or any suitable combination thereof.

In a first aspect, according to one or more embodiments of the present disclosure, a resource rescheduling method is provided, including:
configuring at least two rescheduling policies according to user configuration information, where each of the rescheduling policies is used to generate an instance rescheduling task for achieving a different rescheduling target; generating a target instance rescheduling task based on a target rescheduling policy and running data of a resource cluster in response to an independent trigger condition corresponding to the target rescheduling policy being satisfied, where the running data is used to represent a real-time running state of resource nodes in the resource cluster, and the target instance rescheduling task is at least used to indicate a group of a corresponding source resource node and a corresponding destination resource node in the resource cluster; and executing the target instance rescheduling task to reschedule a target instance running in the source resource node to the destination resource node.

According to one or more embodiments of the present disclosure, each of the rescheduling policies corresponds to at least one independent trigger condition; and/or the independent trigger condition is a combined trigger condition that requires at least two sub-trigger conditions to be satisfied simultaneously. The method further includes configuring the independent trigger condition corresponding to each of the rescheduling policies according to the user configuration information.

According to one or more embodiments of the present disclosure, the generating the target instance rescheduling task based on the target rescheduling policy and the running data of the resource cluster includes: calling a detector interface corresponding to the target rescheduling policy; detecting the running data of the resource cluster by a detector corresponding to the target rescheduling policy; determining a rescheduling type corresponding to the target rescheduling policy; and obtaining a target instance and a source resource node where the target instance is located according to the rescheduling type, where the detector is used to determine a source resource node that matches the rescheduling target; obtaining a destination resource node according to the target instance and the source resource node; and generating the target instance rescheduling task based on the target instance, the source resource node, and the destination resource node.

According to one or more embodiments of the present disclosure, the obtaining the destination resource node according to the target instance and the source resource node includes: calling a target rescheduling algorithm service corresponding to the target rescheduling policy; and processing the running data, the target instance, and the source resource node by the target rescheduling algorithm service so that the destination resource node is obtained. Different rescheduling policies are configured with different rescheduling algorithm services for determining the destination resource node that matches the corresponding rescheduling target.

According to one or more embodiments of the present disclosure, the rescheduling target includes one of the following: load balancing, network bandwidth balancing, and defragmentation. When the rescheduling target is load balancing or network bandwidth balancing, the rescheduling algorithm service is used to select, as the destination resource node, a resource node whose load in the resource cluster is less than or equal to a first threshold. When the rescheduling target is defragmentation, the rescheduling algorithm service is used to select, as the destination resource node, a resource node whose deployment efficiency for the target instance in the resource cluster is greater than or equal to a second threshold.

According to one or more embodiments of the present disclosure, the target instance rescheduling task is used to indicate a target instance, a source resource node where the target instance is located, and a destination resource node. Before the target instance rescheduling task is executed, the method further includes performing conflict verification on the target instance, the source resource node, and the destination resource node that correspond to the target instance rescheduling task so that a verification result is obtained, where the verification result is used to indicate whether the target instance rescheduling task conflicts with an instance rescheduling task corresponding to a non-target rescheduling policy. The executing the target instance rescheduling task includes executing the target instance rescheduling task if the verification result represents that there is no conflict. The verification result includes at least a first verification result representing that there is a conflict, and the first verification result includes at least one of the following: a source resource node conflict, a destination resource node conflict, and a target instance conflict.

According to one or more embodiments of the present disclosure, the performing conflict verification on the target instance, the source resource node, and the destination resource node that correspond to the target instance rescheduling task so that the verification result is obtained includes: calling a verifier corresponding to the target rescheduling policy, where the verifier is used to detect whether the target instance rescheduling task corresponding to the target rescheduling policy will have a negative impact on a rescheduling target corresponding to the non-target rescheduling policy; and processing the target instance rescheduling task based on the verifier so that the verification result is obtained.

According to one or more embodiments of the present disclosure, the processing the target instance rescheduling task based on the verifier so that the verification result is obtained includes: acquiring, based on the verifier, verification interfaces corresponding to the non-target rescheduling policies, respectively, where the verification interfaces are used to detect whether the instance rescheduling task will have a negative impact on the rescheduling target corresponding to the non-target rescheduling policies; processing the target instance rescheduling task by the verification interfaces corresponding to the non-target rescheduling policies, respectively, so that detection results corresponding to the non-target rescheduling policies, respectively, are obtained; and obtaining the verification result according to the detection results corresponding to the non-target rescheduling policies.

According to one or more embodiments of the present disclosure, at least two target instance rescheduling tasks exist. The executing the target instance rescheduling task to reschedule the target instance running in the source resource node to the destination resource node includes: grouping the target instance rescheduling tasks to generate at least one task execution batch, where each of the task execution batches is used to execute at least two of the target instance rescheduling tasks, and there is no conflict between the target instance rescheduling tasks in a same task execution batch; and performing queuing processing on the task execution batches so that the target instances corresponding to the target instance rescheduling tasks are rescheduled to the corresponding destination resource nodes.

According to one or more embodiments of the present disclosure, the grouping the target instance rescheduling tasks to generate the at least one task execution batch includes: obtaining a transfer state and a dependency relationship of a target instance corresponding to each of the target instance rescheduling tasks between resource nodes according to the running data of the resource cluster and each of the target instance rescheduling tasks; and generating the at least one task execution batch according to the transfer state and the dependency relationship of the target instance corresponding to each of the target instance rescheduling tasks between the resource nodes and an instance disruption budget of the resource cluster, where the instance disruption budget is used to represent a maximum number or a maximum proportion of unavailable instances in a target group in the resource cluster.

According to one or more embodiments of the present disclosure, the method further includes: detecting an expired instance rescheduling task from unprocessed task execution batches, where the expired instance rescheduling task is a non-latest generated instance rescheduling task in at least two homogeneous instance rescheduling tasks, and the homogeneous instance rescheduling tasks are target instance rescheduling tasks generated by a same rescheduling policy; and deleting the expired instance rescheduling task from the unprocessed task execution batches.

In a second aspect, according to one or more embodiments of the present disclosure, a resource rescheduling apparatus is provided and includes: a configuration module, configured to configure at least two rescheduling policies according to user configuration information, where each of the rescheduling policies is used to generate an instance rescheduling task for achieving a different rescheduling target; a rescheduling module, configured to generate a target instance rescheduling task based on a target rescheduling policy and running data of a resource cluster in response to an independent trigger condition corresponding to the target rescheduling policy being satisfied, where the running data is used to represent a real-time running state of resource nodes in the resource cluster, and the target instance rescheduling task is at least used to indicate a group of a corresponding source resource node and a corresponding destination resource node in the resource cluster; and an execution module, configured to execute the target instance rescheduling task to reschedule a target instance running in the source resource node to the destination resource node.

According to one or more embodiments of the present disclosure, each of the rescheduling policies corresponds to at least one independent trigger condition; and/or the independent trigger condition is a combined trigger condition that requires at least two sub-trigger conditions to be satisfied simultaneously. The configuration module is further configured to configure the independent trigger condition corresponding to each of the rescheduling policies according to the user configuration information.

According to one or more embodiments of the present disclosure, when generating the target instance rescheduling task based on the target rescheduling policy and the running data of the resource cluster, the rescheduling module is further configured to call a detector interface corresponding to the target rescheduling policy; detect the running data of the resource cluster by a detector corresponding to the target rescheduling policy; determine a rescheduling type corresponding to the target rescheduling policy; and obtain a target instance and a source resource node where the target instance is located according to the rescheduling type, where the detector is used to determine a source resource node that matches the rescheduling target; obtain a destination resource node according to the target instance and the source resource node; and generate the target instance rescheduling task based on the target instance, the source resource node, and the destination resource node.

According to one or more embodiments of the present disclosure, when obtaining the destination resource node according to the target instance and the source resource node, the rescheduling module is further configured to call a target rescheduling algorithm service corresponding to the target rescheduling policy; and process the running data, the target instance, and the source resource node by the target rescheduling algorithm service so that the destination resource node is obtained. Different rescheduling policies are configured with different rescheduling algorithm services for determining the destination resource node that matches the corresponding rescheduling target.

According to one or more embodiments of the present disclosure, the rescheduling target includes one of the following: load balancing, network bandwidth balancing, and defragmentation. When the rescheduling target is load balancing or network bandwidth balancing, the rescheduling algorithm service is used to select, as the destination resource node, a resource node whose load in the resource cluster is less than or equal to a first threshold. When the rescheduling target is defragmentation, the rescheduling algorithm service is used to select, as the destination resource node, a resource node whose deployment efficiency for the target instance in the resource cluster is greater than or equal to a second threshold.

According to one or more embodiments of the present disclosure, the target instance rescheduling task is used to indicate a target instance, a source resource node where the target instance is located, and a destination resource node. Before the target instance rescheduling task is executed, the rescheduling module is further configured to perform conflict verification on the target instance, the source resource node, and the destination resource node that correspond to the target instance rescheduling task so that a verification result is obtained, where the verification result is used to indicate whether the target instance rescheduling task conflicts with an instance rescheduling task corresponding to a non-target rescheduling policy. The execution module is further configured to execute the target instance rescheduling task if the verification result represents that there is no conflict. The verification result includes at least a first verification result representing that there is a conflict, and the first verification result includes at least one of the following: a source resource node conflict, a destination resource node conflict, and a target instance conflict.

According to one or more embodiments of the present disclosure, when performing conflict verification on the target instance, the source resource node, and the destination resource node that correspond to the target instance rescheduling task so that the verification result is obtained, the rescheduling module is further configured to call a verifier corresponding to the target rescheduling policy, where the verifier is used to detect whether the target instance rescheduling task corresponding to the target rescheduling policy will have a negative impact on a rescheduling target corresponding to the non-target rescheduling policy; and process the target instance rescheduling task based on the verifier so that the verification result is obtained.

According to one or more embodiments of the present disclosure, when processing the target instance rescheduling task based on the verifier so that the verification result is obtained, the rescheduling module is further configured to acquire, based on the verifier, verification interfaces corresponding to the non-target rescheduling policies, respectively, where the verification interfaces are used to detect whether the instance rescheduling task will have a negative impact on the rescheduling target corresponding to the non-target rescheduling policies; process the target instance rescheduling task by the verification interfaces corresponding to the non-target rescheduling policies, respectively, so that detection results corresponding to the non-target rescheduling policies, respectively, are obtained; and obtain the verification result according to the detection results corresponding to the non-target rescheduling policies.

According to one or more embodiments of the present disclosure, at least two target instance rescheduling tasks exist. The execution module is further configured to group the target instance rescheduling tasks to generate at least one task execution batch, where each of the task execution batches is used to execute at least two of the target instance rescheduling tasks, and there is no conflict between the target instance rescheduling tasks in a same task execution batch; and perform queuing processing on the task execution batches so that the target instances corresponding to the target instance rescheduling tasks are rescheduled to the corresponding destination resource nodes.

According to one or more embodiments of the present disclosure, when grouping the target instance rescheduling tasks to generate the at least one task execution batch, the execution module is further configured to obtain a transfer state and a dependency relationship of a target instance corresponding to each of the target instance rescheduling tasks between resource nodes according to the running data of the resource cluster and each of the target instance rescheduling tasks; and generate the at least one task execution batch according to the transfer state and the dependency relationship of the target instance corresponding to each of the target instance rescheduling tasks between the resource nodes and an instance disruption budget of the resource cluster, where the instance disruption budget is used to represent a maximum number or a maximum proportion of unavailable instances in a target group in the resource cluster.

According to one or more embodiments of the present disclosure, the execution module is further configured to detect an expired instance rescheduling task from unprocessed task execution batches, where the expired instance rescheduling task is a non-latest generated instance rescheduling task in at least two homogeneous instance rescheduling tasks, and the homogeneous instance rescheduling tasks are target instance rescheduling tasks generated by a same rescheduling policy; and delete the expired instance rescheduling task from the unprocessed task execution batches.

**In** a third aspect, according to one or more embodiments of the present disclosure, an electronic device is provided and includes: at least one processor and a memory; where the memory stores a computer-executable instruction; and the at least one processor executes the computer-executable instruction stored in the memory to cause the at least one processor to execute the resource rescheduling method according to the above first aspect and various possible designs of the first aspect.

In a fourth aspect, according to one or more embodiments of the present disclosure, a non-transitory computer-readable storage medium is provided, where a computer-executable instruction is stored in the computer-readable storage medium, and when the computer-executable instruction is executed by a processor, the resource rescheduling method according to the above first aspect and various possible designs of the first aspect is implemented.

In a fifth aspect, according to one or more embodiments of the present disclosure, a computer program product is provided and includes a computer program, where when the computer program is executed by a processor, the resource rescheduling method according to the above first aspect and various possible designs of the first aspect is implemented.

The above description is merely illustration of preferred embodiments of the present disclosure and applied technical principles. Those skilled in the art should understand that the scope of disclosure involved in the present disclosure is not limited to the technical solutions formed by the specific combination of the above technical features, and shall also cover other technical solutions formed by any combination of the above technical features or equivalent features thereof without departing from the above concept of disclosure. For example, the above features and the technical features provided in the present disclosure (but not limited thereto) and having similar functions may be replaced each other to form a technical solution.

In addition, although the operations are depicted in a specific order, this should not be understood as requiring the operations to be performed in the specific order shown or in a sequential order. Under certain circumstances, multitasking and parallel processing may be advantageous. Similarly, although several specific implementation details are included in the above discussion, these should not be construed as limiting the scope of the present disclosure. Certain features described in the context of separate embodiments may also be implemented in a single embodiment in combination. On the contrary, various features described in the context of a single embodiment may also be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. On the contrary, the specific features and actions described above are merely exemplary forms for implementing the claims.

## Claims

1. A resource rescheduling method, comprising:
configuring at least two rescheduling policies according to user configuration information, wherein each of the at least two rescheduling policies is used to generate an instance rescheduling task for achieving a different rescheduling target;
generating a target instance rescheduling task based on a target rescheduling policy and running data of a resource cluster in response to an independent trigger condition corresponding to the target rescheduling policy being satisfied, wherein the running data is used to represent a real-time running state of resource nodes in the resource cluster, and the target instance rescheduling task is at least used to indicate a group of a source resource node and a destination resource node corresponding to the source resource node in the resource cluster; and
executing the target instance rescheduling task to reschedule a target instance running in the source resource node to the destination resource node.

2. The method of claim 1, wherein each of the at least two rescheduling policies corresponds to at least one independent trigger condition; and/or the independent trigger condition is a combined trigger condition that requires at least two sub-trigger conditions to be satisfied simultaneously; and
the method further comprises:
configuring the independent trigger condition corresponding to each of the at least two rescheduling policies according to the user configuration information.

3. The method of claim 1 or 2, wherein the generating the target instance rescheduling task based on the target rescheduling policy and the running data of the resource cluster comprises:
calling a detector interface corresponding to the target rescheduling policy;
detecting the running data of the resource cluster, determining a rescheduling type corresponding to the target rescheduling policy, and obtaining a target instance and the source resource node where the target instance is located according to the rescheduling type by a detector corresponding to the target rescheduling policy, wherein the detector is used to determine the source resource node that matches a rescheduling target corresponding to the target rescheduling policy;
obtaining the destination resource node according to the target instance and the source resource node; and
generating the target instance rescheduling task based on the target instance, the source resource node, and the destination resource node.

4. The method of claim 3, wherein the obtaining the destination resource node according to the target instance and the source resource node comprises:
calling a target rescheduling algorithm service corresponding to the target rescheduling policy, and processing the running data, the target instance, and the source resource node by the target rescheduling algorithm service to obtain the destination resource node, wherein different rescheduling policies are configured with different rescheduling algorithm services for determining the destination resource node that matches the rescheduling target.

5. The method of claim 4, wherein the rescheduling target comprises one of follows: load balancing, network bandwidth balancing, and defragmentation;
when the rescheduling target is load balancing or network bandwidth balancing, the target rescheduling algorithm service is used to select, as the destination resource node, a resource node whose load in the resource cluster is less than or equal to a first threshold; and
when the rescheduling target is defragmentation, the target rescheduling algorithm service is used to select, as the destination resource node, a resource node whose deployment efficiency for the target instance in the resource cluster is greater than or equal to a second threshold.

6. The method of any one of claims 1-5, wherein the target instance rescheduling task is used to indicate the target instance, the source resource node wherein the target instance is located, and the destination resource node, and before the executing the target instance rescheduling task, the method further comprises:
performing conflict verification on the target instance, the source resource node, and the destination resource node that correspond to the target instance rescheduling task to obtain a verification result, wherein the verification result is used to indicate whether the target instance rescheduling task conflicts with an instance rescheduling task corresponding to a non-target rescheduling policy; and
the executing the target instance rescheduling task comprises:
executing the target instance rescheduling task if the verification result represents that there is no conflict,
wherein the verification result comprises at least a first verification result representing that there is a conflict, and the first verification result comprises at least one of follows:
a source resource node conflict, a destination resource node conflict, and a target instance conflict.

7. The method of claim 6, wherein the performing conflict verification on the target instance, the source resource node, and the destination resource node that correspond to the target instance rescheduling task to obtain a verification result comprises:
calling a verifier corresponding to the target rescheduling policy, wherein the verifier is used to detect whether the target instance rescheduling task corresponding to the target rescheduling policy has a negative impact on the rescheduling target corresponding to the non-target rescheduling policy; and
processing the target instance rescheduling task based on the verifier to obtain the verification result.

8. The method of claim 7, wherein the processing the target instance rescheduling task based on the verifier to obtain the verification result comprises:
acquiring, based on the verifier, a verification interface corresponding to each non-target rescheduling policy, wherein the verification interface is used to detect whether the instance rescheduling task has a negative impact on a rescheduling target corresponding to the each non-target rescheduling policy;
processing the target instance rescheduling task by the verification interface corresponding to the each non-target rescheduling policy, respectively, to obtain a detection result corresponding to the each non-target rescheduling policy, respectively; and
obtaining the verification result according to the detection result corresponding to the each non-target rescheduling policy.

9. The method of any one of claims 1-8, wherein there are at least two target instance rescheduling tasks, and the executing the target instance rescheduling task to reschedule a target instance running in the source resource node to the destination resource node comprises:
grouping the at least two target instance rescheduling tasks to generate at least one task execution batch, wherein each of the at least one task execution batch is used to execute at least two of the at least two target instance rescheduling tasks, and target instances scheduled by target instance rescheduling tasks in one task execution batch are used to support at least one target business service; and
performing queuing processing on the at least one task execution batch so that the target instance corresponding to each of the at least two target instance rescheduling tasks is rescheduled to the corresponding destination resource node.

10. The method of claim 9, wherein the grouping the at least two target instance rescheduling tasks to generate at least one task execution batch comprises:
obtaining a transfer state and a dependency relationship of a target instance corresponding to each of the at least two target instance rescheduling tasks between the resource nodes according to the running data of the resource cluster and the each target instance rescheduling task; and
generating the at least one task execution batch according to the transfer state and the dependency relationship of the target instance corresponding to the each target instance rescheduling tasks between the resource nodes and an instance disruption budget of the resource cluster, wherein the instance disruption budget is used to represent a maximum number or a maximum proportion of unavailable instances in a target group in the resource cluster, and the target group is a set of instances that support the target business service.

11. The method of claim 9 or 10, further comprising:
detecting an expired instance rescheduling task from an unprocessed task execution batch, wherein the expired instance rescheduling task is a non-latest generated instance rescheduling task in at least two homogeneous instance rescheduling tasks, and the at least two homogeneous instance rescheduling tasks are target instance rescheduling tasks generated by a same rescheduling policy; and
deleting a task execution batch corresponding to the expired instance rescheduling task.

12. An electronic device, comprising: a processor and a memory;
wherein the memory stores a computer-executable instruction; and
the processor executes the computer-executable instruction stored in the memory to cause the resource rescheduling method of any one of claims 1 to 11 to be implemented.

13. A computer-readable storage medium, wherein a computer-executable instruction is stored in the non-transitory computer-readable storage medium, and when the computer-executable instruction is executed by a processor, the resource rescheduling method of any one of claims 1 to 11 is implemented.
